# EUROPEAN PATENT APPLICATION

(11) **EP 4 576 416 A1**
(43) Date of publication of application: **25.06.2025**
(21) Application number: 23907895.9
(22) Date of filing: 22.12.2023
(51) Int. Cl.: H01M 50/691, H01M 50/107

(54) **BATTERY CLEANING DEVICE AND CLEANING METHOD**

(30) Priority: 22.12.2022 KR 20220182205
(71) Applicant: LG Energy Solution, Ltd., Seoul 07335 (KR)
(72) Inventor: KIM, Tae-Heon, Daejeon 34122 (KR); LEE, Gi-Yeon, Daejeon 34122 (KR); SHIM, Kyu-Hun, Daejeon 34122 (KR); LEE, Gil-Young, Daejeon 34122 (KR)
(74) Representative: Goddar, Heinz J.
(86) International application number: PCT/KR2023/021503
(87) International publication number: WO 2024/136612

(57) **Abstract**

A cleaning device for cleaning a battery cell according to an embodiment of the present disclosure includes a cleaning disk configured to mount a plurality of battery cells at predetermined intervals and to be rotatable around the central rotation center, an inner cleaning nozzle provided in a direction toward the rotation center of the cleaning disk with respect to the cleaning disk, and an outer cleaning nozzle provided in a direction opposite to the inner cleaning nozzle with respect to the cleaning disk.

## Description

### TECHNICAL FIELD

The present disclosure relates to a battery cleaning device and cleaning method.

The present application claims priority to Korean Patent Application No. 10-2022-0182205 filed on December 22, 2022 in the Republic of Korea, the disclosures of which are incorporated herein by reference.

### BACKGROUND ART

Secondary batteries have high applicability according to product groups and electrical characteristics such as high energy density, and thus are commonly applied not only to portable devices but also to electric vehicles (EVs) or hybrid electric vehicles (HEVs) driven by electric power sources. Such secondary batteries are attracting attention as a new energy source to improve eco-friendliness and energy efficiency in that it has not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries, and the like. An operating voltage of the unit secondary battery cell, namely a unit battery cell, is about 2.5 V to 4.5 V. Therefore, if a higher output voltage is required, a plurality of battery cells may be connected in series to configure a battery pack. In addition, depending on the charge/discharge capacity required for the battery pack, a plurality of battery cells may be connected in parallel to configure a battery pack. Thus, the number of battery cells included in the battery pack may be variously set according to the required output voltage and/or the demanded charge/discharge capacity.

Meanwhile, when cleaning the surface of a cylindrical battery cell, there was a problem in the prior art in that only a certain position was cleaned repeatedly or deviations in the nozzle position for each facility occurred due to manual adjustment by an operator. As a result, there was a problem of different cleaning quality for each secondary battery.

### DISCLOSURE

### Technical Problem

The present disclosure is designed to solve the problems of the related art, and therefore the present disclosure is directed to ensuring uniform cleaning power on the surface of a cylindrical battery cell.

**In** another aspect, the present disclosure is directed to eliminating deviations in the position of the cleaning nozzle for each facility by standardizing the position of each cleaning nozzle based on the arrangement configuration of the cleaning nozzle according to the rotation of the battery cell and setting it as a fixed parameter.

**In** still another aspect, the present disclosure is directed to preventing the occurrence of deviations in the position of the cleaning nozzle for each facility due to manual adjustment by an operator.

However, technical problems to be solved by the present disclosure are not limited to the above-described problems, and other problems not mentioned herein may be clearly understood by those skilled in the art from the following description of the present disclosure.

### Technical Solution

A cleaning device for cleaning a battery cell according to an embodiment of the present disclosure for solving the above-described problem includes a cleaning disk configured to mount a plurality of battery cells at predetermined intervals and to be rotatable around the central rotation center; and a cleaning nozzle for cleaning the battery cell, including an inner cleaning nozzle provided in a direction toward the rotation center of the cleaning disk with respect to the cleaning disk and an outer cleaning nozzle provided in a direction opposite to the inner cleaning nozzle with respect to the cleaning disk.

In one aspect of the present disclosure, the cleaning disk may include a plurality of placement docks for mounting a plurality of battery cells.

In another aspect of the present disclosure, the placement docks may be configured to be spaced apart from each other at a predetermined angle.

In still another aspect of the present disclosure, the placement dock may be configured to be rotatable around the rotation center of the cleaning disk.

In still another aspect of the present disclosure, the placement dock may be configured to be rotatable around the central rotation center of the placement dock.

Preferably, the placement dock may be configured to be rotatable by (360/M)° when M is a natural number of 2 or more.

In one aspect of the present disclosure, the inner cleaning nozzle, the battery cell, and the outer cleaning nozzle may be provided in a straight line.

Preferably, the inner cleaning nozzle and the outer cleaning nozzle may be configured to spray cleaning solution toward the battery cell.

In another aspect of the present disclosure, the inner cleaning nozzle and the outer cleaning nozzle may be configured to have N cleaning modes with a predetermined height and a predetermined angle.

In still another aspect of the present disclosure, M and N may be relatively prime.

In still another aspect of the present disclosure, the cleaning mode may be set by parameterizing the arrangement height and angle of the cleaning nozzle.

In still another aspect of the present disclosure, the cleaning device may include K sets of N cleaning modes.

In still another aspect of the present disclosure, the placement dock may rotate by (360/M)° while the cleaning disk rotates by (360/(N*K))°.

### Advantageous Effects

According to the present disclosure, the surface of a cylindrical battery cell may be cleaned uniformly.

In addition, according to the present disclosure, deviations in the position of the cleaning nozzle for each facility may be eliminated by standardizing the position of each cleaning nozzle based on the arrangement configuration of the cleaning nozzle according to the rotation of the battery cell and setting it as a fixed parameter.

According to the present disclosure, it is possible to prevent the occurrence of deviations in the position of the cleaning nozzle for each facility due to manual adjustment by an operator.

However, effects to be obtained by the present disclosure are not limited to the above-described effects, and other technical effects not mentioned herein may be clearly understood by those skilled in the art from the following description of the present disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is a view for describing a cleaning device according to an embodiment of the present disclosure.
FIG. 2 is an enlarged view of a portion of the cleaning device of FIG. 1.
FIG. 3 is a view for describing an example of a cleaning mode of the cleaning device of FIG. 1.
FIG. 4 is a view for describing an example of a cleaning mode of the cleaning device of FIG. 1.
FIG. 5 is a view for describing an example of a cleaning mode of the cleaning device of FIG. 1.
FIG. 6 is a view for describing an example of a cleaning mode of the cleaning device of FIG. 1.
FIG. 7 is a view for describing an example of a cleaning mode of the cleaning device of FIG. 1.
FIG. 8 is a view for describing an operation process of a cleaning device according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

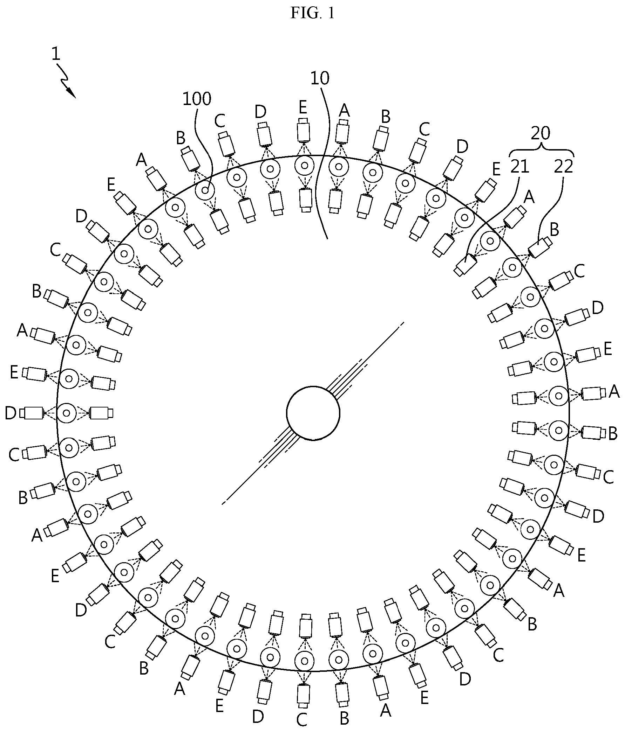

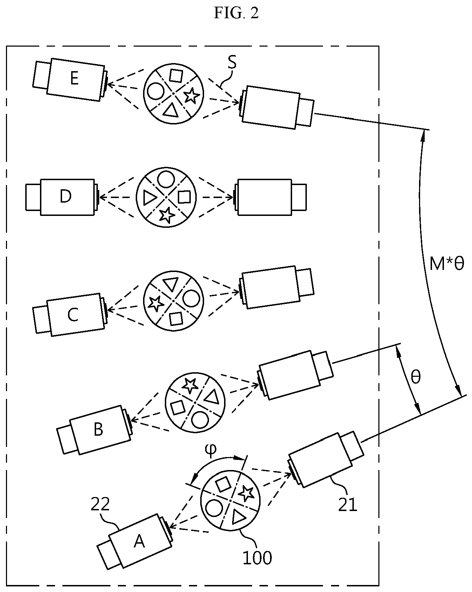

FIG. 1 is a view for describing a cleaning device 1 according to an embodiment of the present disclosure, and FIG. 2 is an enlarged view of a portion of the cleaning device 1 of FIG. 1.

Referring to FIGS. 1 and 2, the cleaning device 1 includes a cleaning disk 10 and a cleaning nozzle 20. The cleaning device 1 may be a cleaning device 1 that cleans a battery cell 100. For example, the cleaning device 1 may be a cleaning device 1 that cleans the exterior of a cylindrical battery cell 100.

More specifically, the cleaning disk 10 may be configured to mount a plurality of battery cells 100 at predetermined intervals. For example, the cleaning disk 10 may include at least one placement dock 11 for mounting a plurality of battery cells 100. Preferably, the cleaning disk 10 may include a plurality of placement docks 11. For example, the placement dock 11 may be provided in plurality along the circumference of the cleaning disk 10. In this case, the placement docks 11 may be spaced apart from each other at a predetermined angle. For example, referring to FIG. 2, the placement docks 11 may be disposed to be spaced apart from each other by an angle of θ. The cleaning disk 10 may have the shape of an approximately circular disk. Therefore, the placement docks 11 may be provided on the cleaning disk 10 as many as (360/θ). As an embodiment of the present disclosure, referring to FIG. 1 as an example of the present disclosure, θ may be set to about 8°. Accordingly, 45 placement docks 11 may be provided. However, this corresponds to only one embodiment of the present disclosure, and of course, the number or separation angle of the placement docks 11 of the present disclosure is not limited thereto.

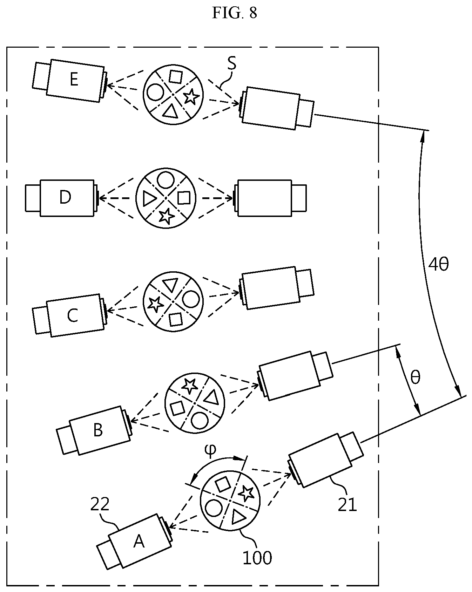

Referring to FIG. 1, the cleaning disk 10 may be configured to be rotatable around the central rotation center. For example, referring to FIG. 2, the cleaning disk 10 may rotate counterclockwise around the central rotation center. Accordingly, the placement dock 11 provided on the cleaning disk 10 may be configured to be rotatable around the rotation center of the cleaning disk 10. For example, the cleaning disk 10 may rotate by θ and then pause for a moment. For example, referring to FIG. 2, after the battery cell 100 mounted on the placement dock 11 of the cleaning disk 10 is cleaned by the cleaning nozzle 20 set to cleaning mode A while stationary, the cleaning disk 10 may rotate clockwise by θ and then pause again. Since the battery cell 100 also pauses while the cleaning disk 10 pauses, the battery cell 100 may be cleaned by the cleaning nozzle 20 set to cleaning mode B. The battery cell 100 may then be cleaned by the cleaning nozzle 20 sequentially set to cleaning modes C, D, and E. The detailed cleaning process will be described in more detail later with reference to FIG. 8.

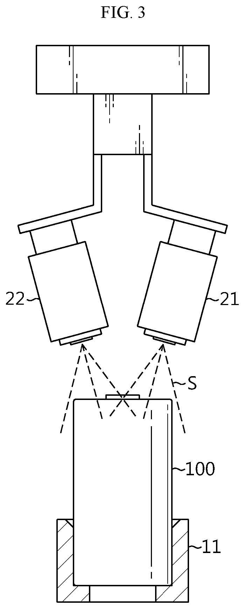

According to the structure of the present disclosure as described above, the cleaning device 1 may clean the battery cell 100 at various angles and directions by the cleaning nozzle 20 in various cleaning modes. For example, in the prior art, an operator manually processed and set the length, angle, and position of the pipe conveying the cleaning solution S, resulting in deviations in the position of the cleaning nozzle 20 for each facility, which in turn caused uneven cleaning power. However, according to the present disclosure, since the battery cell 100 is cleaned by a preset cleaning mode, there is no need for an operator to manually adjust the cleaning nozzle 20 separately. Therefore, it is possible to prevent the occurrence of deviations in the position of the cleaning nozzle 20. Accordingly, all the battery cells 100 mounted on the cleaning device 1 may be cleaned uniformly. Such a plurality of cleaning modes will be described in detail later with reference to FIGS. 3 to 7.

In another aspect of the present disclosure, the placement dock 11 may be configured to be rotatable around the central rotation center of the placement dock 11. Accordingly, the battery cell 100 mounted on the placement dock 11 may rotate around the central axis of the battery cell 100.

For example, referring to FIG. 2, the placement dock 11 may rotate counterclockwise. Accordingly, the battery cell 100 mounted on the placement dock 11 may also rotate counterclockwise. On the other hand, the placement dock 11 may also rotate clockwise, and the rotation direction of the placement dock 11 is not particularly limited.

Referring to FIG. 2 again, the placement dock 11 may rotate by ϕ while moving from one point to the next. More specifically, while the cleaning disk 10 rotates by θ, the placement dock 11 may rotate by ϕ. In other words, while the battery cell 100 mounted on the placement dock 11 rotates by θ around the rotation center of the cleaning disk, the battery cell 100 mounted on the placement dock 11 may rotate by ϕ. That is, the battery cell 100 may rotate simultaneously while moving along the circumference of the cleaning disk 10.

The cleaning nozzle 20 may clean the battery cell 100. The cleaning nozzle 20 may spray cleaning solution S capable of cleaning the exterior of the battery cell 100. The cleaning nozzle 20 may include an inner cleaning nozzle 21 and an outer cleaning nozzle 22. Specifically, the cleaning nozzle 20 includes an inner cleaning nozzle 21 provided in a direction toward the rotation center of the cleaning disk 10 with respect to the cleaning disk 10 and an outer cleaning nozzle 22 provided in a direction opposite to the inner cleaning nozzle 21 with respect to the cleaning disk 10. The inner cleaning nozzle 21 and the outer cleaning nozzle 22 may form a pair. That is, the inner cleaning nozzle 21 and the outer cleaning nozzle 22 may constitute a pair of cleaning nozzles 20.

Meanwhile, in each cleaning mode, the inner cleaning nozzle 21 and the outer cleaning nozzle 22 may be configured to spray the cleaning solution S toward the battery cell 100. Preferably, the inner cleaning nozzle 21, the battery cell 100, and the outer cleaning nozzle 22 may be provided in a straight line. That is, the inner cleaning nozzle 21 and the outer cleaning nozzle 22 may clean both sides of the battery cell 100 simultaneously.

In one aspect of the present disclosure, the inner cleaning nozzle 21 and the outer cleaning nozzle 22 may have N cleaning modes with a predetermined height and a predetermined angle. For example, each of the N cleaning modes may be configured such that the height of the cleaning nozzle 20 and/or the angle of the cleaning nozzle 20 are different. The cleaning mode may be set by parameterizing the placement height and angle of the cleaning nozzle 20. According to the N cleaning modes, all the areas forming the exterior of the battery cell 100 may be cleaned.

In another aspect of the present disclosure, the paired inner cleaning nozzle 21 and outer cleaning nozzle 22 need not necessarily have the same height and/or angle. The height and/or angle of the paired inner cleaning nozzle 21 and outer cleaning nozzle 22 may be different from each other.

According to the above features, since the battery cell 100 is cleaned by a preset cleaning mode, there is no need for an operator to manually adjust the cleaning nozzle 20 separately. That is, according to the present disclosure, it is possible to prevent the occurrence of deviations for each facility through fixed parameterization of the cleaning nozzle 20. Accordingly, all the battery cells 100 mounted on the cleaning device 1 may be cleaned uniformly. In addition, according to the present disclosure, it is possible to prevent the occurrence of deviations in the position of the cleaning nozzle 20 for each facility due to manual adjustment by an operator. In addition, according to the above configuration of the present disclosure, the number of cleaning modes may be diversified into N, so that the battery cell 100 may be cleaned by angle and by height. Accordingly, it becomes possible to uniformly clean the entire area of the battery cell 100.

FIGS. 3 to 7 are views for describing an example of a cleaning mode of the cleaning device 1 of FIG. 1.

As an embodiment of the present disclosure, FIGS. 3 to 7 show specific positions and angles of the cleaning nozzles 20 in the cleaning device 1 including five cleaning modes. Hereinafter, the specific shape of each cleaning nozzle 20 in an embodiment including five cleaning modes will be described.

First, FIG. 3 is a view for describing the shape of the cleaning nozzle 20 set to cleaning mode A according to an embodiment of the present disclosure.

Referring to FIG. 3, the cleaning mode A may be a top surface vertical spray mode. That is, in the cleaning mode of FIG. 3, the cleaning nozzle 20 may be set to spray the cleaning solution S vertically toward the top surface of the battery cell 100. The sprayed cleaning solution S may fully cover the top surface of the battery cell 100. Accordingly, according to the cleaning mode A, the entire top surface of the battery cell 100 may be cleaned.

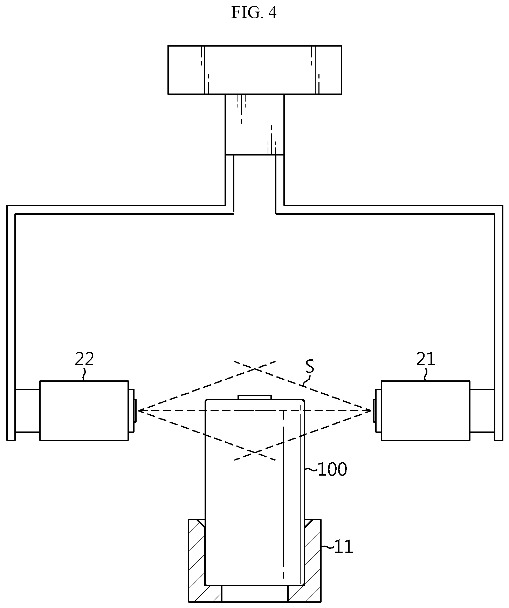

Next, FIG. 4 is a view for describing the shape of the cleaning nozzle 20 set to cleaning mode B according to an embodiment of the present disclosure.

Referring to FIG. 4, the cleaning mode B may be an upper side surface horizontal spray mode. That is, in the cleaning mode of FIG. 4, the cleaning nozzle 20 may be set to spray the cleaning solution S horizontally toward the side surface of the upper portion of the battery cell 100. The sprayed cleaning solution S may fully cover the side surface of the upper portion of the battery cell 100. Preferably, the cleaning solution S may even cover the top surface of the battery cell 100. Accordingly, according to the cleaning mode B, the entire side surface of the upper portion of the battery cell 100 may be cleaned.

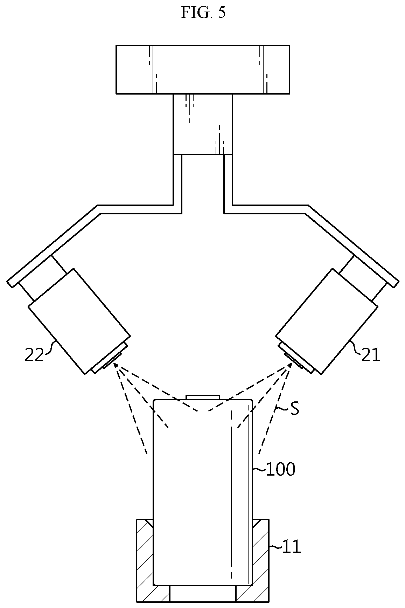

Next, FIG. 5 is a view for describing the shape of the cleaning nozzle 20 set to cleaning mode C according to an embodiment of the present disclosure.

Referring to FIG. 5, the cleaning mode C may be an upper side surface diagonal spray mode. That is, in the cleaning mode of FIG. 5, the cleaning nozzle 20 may be set to spray the cleaning solution S in a diagonal direction toward the side surface of the upper portion of the battery cell 100. More specifically, the cleaning nozzle 20 may spray the cleaning solution S in a diagonal direction from the upper portion of the battery cell 100 toward the lower portion of the battery cell 100 and the center of the battery cell 100. For example, the angle formed by the axial direction of the battery cell 100 and the spray direction of the nozzle may be about 20 degrees or more and less than about 90 degrees. However, the above angle is only an embodiment, and the diagonal angle of the nozzle of the present disclosure is not limited thereto. The sprayed cleaning solution S may simultaneously cover the top surface of the battery cell 100 and the side surface of the upper portion of the battery cell 100. Accordingly, according to the cleaning mode C, both the top surface of the battery cell 100 and the side surface of the upper portion of the battery cell 100 may be cleaned.

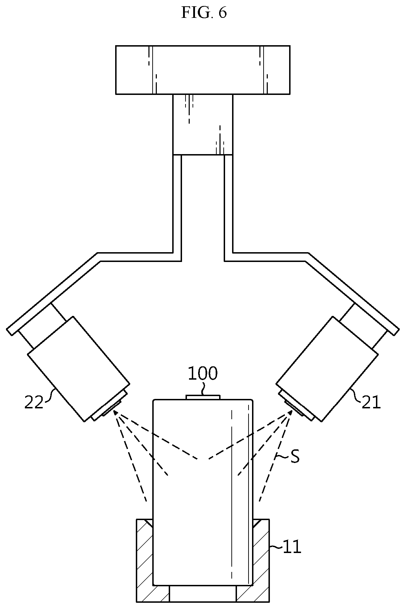

Next, FIG. 6 is a view for describing the shape of the cleaning nozzle 20 set to cleaning mode D according to an embodiment of the present disclosure.

Referring to FIG. 6, the cleaning mode D may be a middle side surface diagonal spray mode. That is, in the cleaning mode of FIG. 6, the cleaning nozzle 20 may be set to spray the cleaning solution S in a diagonal direction toward the side surface of the middle portion of the battery cell 100. More specifically, the cleaning nozzle 20 may spray the cleaning solution S in a diagonal direction from the middle portion of the battery cell 100 toward the lower portion of the battery cell 100 and the center of the battery cell 100. For example, the angle formed by the axial direction of the battery cell 100 and the spray direction of the nozzle may be about 20 degrees or more and less than about 90 degrees. However, the above angle is only an embodiment, and the diagonal angle of the nozzle of the present disclosure is not limited thereto. The cleaning solution S may cover the side surface of the middle portion of the battery cell 100. Accordingly, according to the cleaning mode D, the entire side surface of the middle portion of the battery cell 100 may be cleaned.

In another aspect of the present disclosure, the nozzle angle of cleaning mode D and the nozzle angle of cleaning mode C may be different from each other. By variously setting the nozzle angle for each cleaning mode, the area where the sprayed cleaning solution S contacts the battery cell 100 and/or the spray intensity of the sprayed cleaning solution S may be set differently. Accordingly, the cleaning effect may be further improved.

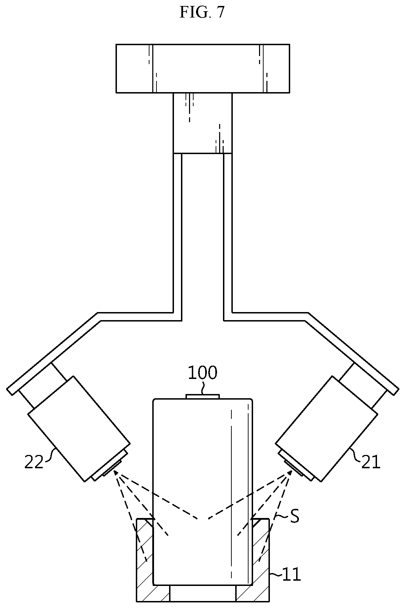

Next, FIG. 7 is a view for describing the shape of the cleaning nozzle 20 set to cleaning mode E according to an embodiment of the present disclosure.

Referring to FIG. 7, the cleaning mode E may be a lower side surface diagonal spray mode. That is, in the cleaning mode of FIG. 7, the cleaning nozzle 20 may be set to spray the cleaning solution S in a diagonal direction toward the side surface of the lower portion of the battery cell 100. More specifically, the cleaning nozzle 20 may spray the cleaning solution S in a diagonal direction from the lower portion of the battery cell 100 toward the lower portion of the battery cell 100 and the center of the battery cell 100. For example, the angle formed by the axial direction of the battery cell 100 and the spray direction of the nozzle may be about 20 degrees or more and less than about 90 degrees. However, the above angle is only an embodiment, and the diagonal angle of the nozzle of the present disclosure is not limited thereto. The cleaning solution S may cover the side surface of the lower portion of the battery cell 100. Accordingly, according to the cleaning mode E, the entire side surface of the lower portion of the battery cell 100 may be cleaned.

In another aspect of the present disclosure, the nozzle angle of cleaning mode E may be different from the nozzle angle of cleaning mode C and/or the nozzle angle of cleaning mode D. By variously setting the nozzle angle for each cleaning mode, the area where the sprayed cleaning solution S contacts the battery cell 100 and/or the spray intensity of the sprayed cleaning solution S may be set differently. Accordingly, the cleaning effect may be further improved.

FIG. 8 is a view for describing an operation process of a cleaning device 1 according to an embodiment of the present disclosure.

Referring to FIG. 8, in an embodiment of the present disclosure, the cleaning mode may be set to, for example, 5 (N = 5). Specifically, the five cleaning modes may correspond to A, B, C, D, and E, which may respectively correspond to the cleaning modes shown in FIGS. 3 to 7. The cleaning nozzles 20 set to the N cleaning modes may be repeatedly arranged along the circumference of the cleaning disk 10. For example, referring to FIG. 8, the cleaning modes may be set in the order of A, B, C, D, E, A, B, C, D, E, A, B, C, ... along the circumference of the cleaning nozzle 20. The cleaning nozzle 20 may face the battery cell 100. That is, the inner cleaning nozzle 21 may face radially outward toward the battery cell 100, and the outer cleaning nozzle 22 may face radially inward toward the battery cell 100.

Referring to FIG. 8 again, the placement docks 11 may be disposed to be spaced apart from each other by an angle of θ along the circumference of the cleaning disk 10. Taking the embodiment of FIG. 8 as an example, the placement docks 11 may be disposed to be spaced apart from each other by an angle of 8° along the circumference of the cleaning disk 10, and accordingly, a total of 45 placement docks 11 may be provided along the circumference of the cleaning disk 10. In other words, the number of battery cells 100 that can be mounted on the placement docks 11 may be 45. In addition, the number of the pair of cleaning nozzles 20 corresponding to the battery cell 100 may be 45. That is, the placement docks 11 included in the cleaning disk 10 of the present disclosure may be provided as many as (360/θ). In addition, a pair of cleaning nozzles 20 may be provided as many as (360/θ).

Referring to FIG. 8 again, the placement dock 11 may rotate by ϕ while moving from one point to the next. More specifically, while the cleaning disk 10 rotates by θ, the placement dock 11 may rotate by ϕ. In other words, while the battery cell 100 mounted on the placement dock 11 rotates by θ around the rotation center of the cleaning disk, the battery cell 100 mounted on the placement dock 11 may rotate by ϕ. That is, the battery cell 100 may rotate simultaneously while moving along the circumference of the cleaning disk 10.

Meanwhile, when the placement dock 11 rotates M times by ϕ, the placement dock 11 may return to the angle initially set. Here, M may be a natural number of 2 or more. In other words, when the battery cell 100 rotates M times by ϕ, the battery cell 100 may return to its original position. That is, ϕ*M = 360°. In other words, the rotation angle ϕ of the placement dock 11 may be (360/M)°.

For example, referring to the embodiment of FIG. 8 (M = 4), if the battery cell 100 rotates 4 times by ϕ = 90°, it corresponds to the rotation by 360°, and thus the battery cell 100 may return to the angle before starting the rotation. More specifically, in FIG. 8, the battery cell 100 may rotate by ϕ = 90° at a time. For example, for convenience of description, the battery cell 100 may be divided into four sections by ϕ = 90°, which may be defined as a star, a square, a circle, and a triangle section as shown in FIG. 8. In the battery cell 100 located at the bottom in FIG. 8, the star section faces the inner cleaning nozzle 21. When the battery cell 100 moves clockwise by θ and simultaneously rotates counterclockwise by ϕ = 90°, the triangle section is facing the inner cleaning nozzle 21. Next, when the battery cell 100 moves clockwise by θ and simultaneously rotates counterclockwise by ϕ = 90°, the circle section is facing the inner cleaning nozzle 21. Next, when the battery cell 100 moves clockwise by θ and simultaneously rotates counterclockwise by ϕ = 90°, the square section is facing the inner cleaning nozzle 21. Again, when the battery cell 100 moves clockwise by θ and simultaneously rotates counterclockwise by ϕ = 90°, the star section is again facing the inner cleaning nozzle 21. Eventually, the battery cell 100 is reset to the same angle as the angle before starting the rotation. That is, when the battery cell 100 rotates M times by ϕ, the battery cell 100 is again set to the same angle as the initial angle of the battery cell 100.

Meanwhile, from the perspective of the battery cell 100, the star section may be cleaned in A mode and then cleaned in E mode. Again, in the same manner, when the battery cell 100 moves clockwise by θ and simultaneously rotates counterclockwise by ϕ = 90° while repeating the same, the star section of the battery cell 100 may be cleaned in D mode. Thereafter, the battery cell 100 may be cleaned in C mode. Thereafter, the battery cell 100 may be cleaned in B mode. Thereafter, the battery cell 100 may be cleaned in A mode. That is, the star section may be cleaned by repeating A mode → E mode → D mode → C mode → B mode → A mode → E mode → D mode → C mode ... and so on. As a result, the star section corresponding to a portion of the exterior of the battery cell 100 may be cleaned in A, B, C, D, and E modes, which are the entire cleaning modes. Likewise, the square section, the circle section, and the triangle section may also be cleaned in A, B, C, D, and E modes, which are the entire cleaning modes.

In another aspect of the present disclosure, if the N cleaning modes are defined as one set, the cleaning modes may be repeated K times. That is, the cleaning device 1 may include K sets of N cleaning modes. For example, assuming that N cleaning modes are repeated K times, a pair of cleaning nozzles 20 surrounding the cleaning disk 10 may be provided with a total of N*K pairs. In other words, the separation angle θ of the placement dock 11 may be (360/(N*K))°. After all, the placement dock 11 rotates by ϕ while the cleaning disk 10 rotates by θ, so that the placement dock 11 may rotate by (360/M)° while the cleaning disk 10 rotates by (360/(N*K))°. Meanwhile, K may be adjusted to an appropriate value depending on the operating speed of the facility.

In still another aspect of the present disclosure, the entire area of the battery cell 100 may each be configured to be cleaned in all cleaning modes. For example, M and N may be relatively prime.

M is 360/ϕ, which, in other words, may mean the number of positions occurring when the battery cell 100 rotates. For example, referring to FIG. 8, when ϕ = 90°, M = 4, which may mean the number of states in which the battery cell 100 may face the cleaning nozzle 20. For example, the battery cell 100 may face the cleaning nozzle 20 at four angles. Specifically, the battery cell 100 may be in a state where the star section faces the inner cleaning nozzle 21. Alternatively, the battery cell 100 may be in a state where the square section faces the inner cleaning nozzle 21. Alternatively, the battery cell 100 may be in a state where the circle section faces the inner cleaning nozzle 21. Alternatively, the battery cell 100 may be in a state where the triangle section faces the inner cleaning nozzle 21. That is, in the embodiment of FIG. 8, the battery cell 100 may be placed in four positions.

Meanwhile, N is the number of cleaning modes having a predetermined height and a predetermined angle, and in the embodiment of FIG. 8, for example, N = 5 as there are five cleaning modes, A, B, C, D, and E.

In this way, since M = 4, N = 5, and M and N are relatively prime, the entire area of the battery cell 100 may be uniformly cleaned in all cleaning modes. For example, as described above, the star section of the battery cell 100 is first cleaned in the A cleaning mode and then cleaned in the E, D, C, and B cleaning modes. Therefore, the star section is cleaned through all cleaning modes. Likewise, the square, the circle, and the triangle sections may also be cleaned through all cleaning modes.

If M and N are not relatively prime, there may be a case in which the same area of the battery cell 100 continues to be cleaned only in the same cleaning mode. For example, a case in which M = 4 and N = 2 may be given as an example. If M = 4, the battery cell 100 rotates by 90°. For example, the battery cell 100 may be divided into 1/4 and each side may be defined as M1, M2, M3, and M4. Meanwhile, when N = 2, the cleaning mode may include, for example, N1 and N2 modes. In that case, the M1 and M3 sides are cleaned only in the N1 cleaning mode, and the M2 and M4 sides are cleaned only in the N2 cleaning mode. That is, the M1 and M3 sides cannot be cleaned in the N2 cleaning mode, and the M2 and M4 sides cannot be cleaned in the N1 cleaning mode. Accordingly, a problem occurs in which only certain positions are repeatedly cleaned and certain positions cannot be cleaned. Therefore, it is preferable that the entire area of the battery cell 100 is configured to be cleaned in all cleaning modes, respectively, as in the present disclosure.

According to this configuration of the present disclosure, it is possible to secure uniform cleaning power of the cylindrical battery cell 100. That is, according to the present disclosure, the entire 360-degree surface of the battery cell 100 may be cleaned uniformly from top to bottom according to the above arrangement. Furthermore, according to the present disclosure, deviations in the position of the cleaning nozzle 20 for each facility may be eliminated by standardizing the position of each cleaning nozzle 20 based on the arrangement configuration of the cleaning nozzle 20 according to the rotation of the battery cell 100 and setting it as a fixed parameter, and uniform cleaning power may be ensured.

The present disclosure has been hereinabove described with regard to a limited number of embodiments and drawings, but the present disclosure is not limited thereto and it is obvious to those skilled in the art that a variety of modifications and changes may be made thereto within the technical aspects of the present disclosure and the equivalent scope of the appended claims.

### [Explanation of Reference Signs]

- 1:: cleaning device
- 10:: cleaning disk
- 11:: placement dock
- 20:: cleaning nozzle
- 21:: inner cleaning nozzle
- 22:: outer cleaning nozzle
- 100:: battery cell
- S:: cleaning solution

## Claims

1. A cleaning device for cleaning a battery cell, comprising:
a cleaning disk configured to mount a plurality of battery cells at predetermined intervals and to be rotatable around the central rotation center; and
a cleaning nozzle for cleaning the battery cell, comprising an inner cleaning nozzle provided in a direction toward the rotation center of the cleaning disk with respect to the cleaning disk and an outer cleaning nozzle provided in a direction opposite to the inner cleaning nozzle with respect to the cleaning disk.

2. The cleaning device according to claim 1,
wherein the cleaning disk comprises a plurality of placement docks for mounting a plurality of battery cells.

3. The cleaning device according to claim 2,
wherein the placement docks are spaced apart from each other at a predetermined angle.

4. The cleaning device according to claim 2,
wherein the placement dock is configured to be rotatable around the rotation center of the cleaning disk.

5. The cleaning device according to claim 2,
wherein the placement dock is configured to be rotatable around the central rotation center of the placement dock.

6. The cleaning device according to claim 5,
wherein the placement dock is configured to be rotatable by (360/M)° when M is a natural number of 2 or more.

7. The cleaning device according to claim 1,
wherein the inner cleaning nozzle, the battery cell, and the outer cleaning nozzle are provided in a straight line.

8. The cleaning device according to claim 1,
wherein the inner cleaning nozzle and the outer cleaning nozzle are configured to spray cleaning solution toward the battery cell.

9. The cleaning device according to claim 6,
wherein the inner cleaning nozzle and the outer cleaning nozzle have N cleaning modes with a predetermined height and a predetermined angle.

10. The cleaning device according to claim 9,
wherein M and N are relatively prime.

11. The cleaning device according to claim 9,
wherein the cleaning mode is set by parameterizing the arrangement height and angle of the cleaning nozzle.

12. The cleaning device according to claim 9,
wherein the cleaning device comprises K sets of N cleaning modes.

13. The cleaning device according to claim 12,
wherein the placement dock rotates by (360/M)° while the cleaning disk rotates by (360/(N*K))°.
